# EUROPEAN PATENT SPECIFICATION

(11) **EP 4 152 261 B1**
(45) Date of publication and mention of the grant of the patent: **15.07.2026**
(21) Application number: 21803091.4
(22) Date of filing: 25.06.2021
(51) Int. Cl.: G06T 7/73, G06T 7/11, G01V 5/20

(54) **TARGET REGION POSITIONING METHOD AND APPARATUS, DEVICE, MEDIUM, AND PROGRAM PRODUCT**
ZIELREGIONPOSITIONIERUNGSVERFAHREN UND -VORRICHTUNG, VORRICHTUNG, MEDIUM UND PROGRAMMPRODUKT
PROCÉDÉ ET APPAREIL DE POSITIONNEMENT DE RÉGION CIBLE, DISPOSITIF, SUPPORT, ET PRODUIT-PROGRAMME

(43) Date of publication of application: 22.03.2023
(73) Proprietor: Nuctech Company Limited, TongFang Building, Shuangqinglu, Haidian District Beijing 100084 (CN)
(72) Inventor: ZHANG, Li, Beijing 100084 (CN); TANG, Hu, Beijing 100084 (CN); SUN, Yunda, Beijing 100084 (CN); WANG, Shuo, Beijing 100084 (CN); LI, Xinbin, Beijing 100084 (CN); JIN, Xin, Beijing 100084 (CN)
(74) Representative: Gunzelmann, Rainer
(86) International application number: PCT/CN2021/102439
(87) International publication number: WO 2021/228280

(56) References cited:
- CN-A- 1 971 414
- CN-A- 101 561 405
- CN-A- 109 374 658
- CN-A- 109 685 865
- US-A1- 2007 297 560
- US-A1- 2011 255 762
- US-A1- 2013 216 100

## Description

### TECHNICAL FIELD

Embodiments of the present disclosure relate to a radiation imaging, and in particular, to a method and an apparatus of positioning a target region, a device, a medium and a program product.

### BACKGROUND

When a security check is conducted on a checked baggage, it is necessary to determine whether a target object exists in the checked baggage, and a target region where the target object is located is determined when the target object exists in the checked baggage. The process is tedious and requires a long time to implement. When objects in the checked baggage block each other, a region where other objects block the target object may be selected by mistake, so that a target region positioning may not be achieved accurately and efficiently.

US 2007/297560 A1 discloses a method and system to analyze the content of a packed bag utilizing a scanner. The bag is scanned for a scannable characteristic to acquire scan data representative of a content of the piece of baggage. A volumetric data set is generated from the scan data, wherein the volumetric data set includes voxel values of the scannable characteristic throughout a volume of interest in the baggage. A rendered view is produced of the content of the piece of baggage based on the voxel values within a selected range from the volumetric data set.

US 2013/216100 A1 discloses a method to identify and/or classify objects of interest (e.g., potential granular objects) from a radiographic examination of the object. Image data of the object is transformed using a spectral transformation, such as a Fourier transformation, to generate image data in a spectral domain. Using the image data in the spectral domain, one or more one-dimensional spectral signatures can be generated and features of the signatures can be extracted and compared to features of one or more known objects. If one or more features of the signatures correspond (e.g., within a predetermined tolerance) to the features of a known object to which the feature(s) is compared, the object of interest may be identified and/or classified based upon the correspondence.

US 2011/255762 A1 discloses a method for determining a region of interest in ultrasound data. The method includes defining an ROI within an acquired ultrasound data set and identifying a plurality of different image planes within the acquired ultrasound data set. The method further includes determining a significant edge from at least one border of the ROI based on the plurality of image planes and adjusting the ROI based on the determined significant edge.

### SUMMARY

According to embodiments of the present disclosure, a method and an apparatus of positioning a target region, a device, a medium and a program product are provided. The invention is defined by the appended claims.

In the present invention according to claim 1, a method of positioning a target region is provided, including: acquiring first three-dimensional volume data of a checked baggage; generating a first projected image of the checked baggage in a first direction based on the first three-dimensional volume data; drawing a selected layer based on the first projected image, wherein an extension plane of the selected layer is parallel to the first direction; generating a second projected image of the selected layer in a second direction, wherein the second direction is substantially perpendicular to the extension plane of the selected layer; determining, based on the second projected image, whether the selected layer contains only an envelope region of a target object in the checked baggage; and in a case that the selected layer contains only the envelope region of the target object in the checked baggage, determining the selected layer as the target region.

According to the presesnt invention according to claim 1, the above-mentioned drawing a selected layer based on the first projected image includes: drawing a rectangular two-dimensional region on the first projected image; and extending the rectangular two-dimensional region in the first direction to form the selected layer with the rectangular two-dimensional region as a side surface, wherein a first long side and a second long side of the rectangular two-dimensional region form a first surface and a second surface of the selected layer respectively, the first surface and the second surface are parallel to the first direction, and the second direction is substantially perpendicular to the first surface and the second surface.

According to embodiments of the present disclosure, the above-mentioned method further includes: after drawing the rectangular two-dimensional region, keeping a width of the rectangular two-dimensional region unchanged, and adjusting a position of the rectangular two-dimensional region in the second direction.

According to embodiments of the present disclosure, the above-mentioned method further includes: after drawing the rectangular two-dimensional region, adjusting a position of the first long side of the rectangular two-dimensional region in the second direction; and adjusting a position of the second long side of the rectangular two-dimensional region in the second direction.

According to embodiments of the present disclosure, the above-mentioned generating a second projected image of the selected layer in a second direction includes: segmenting second three-dimensional volume data for the selected layer from the first three-dimensional volume data; and generating the second projected image of the selected layer in the second direction based on the second three-dimensional volume data.

According to embodiments of the present disclosure, the above-mentioned determining, based on the second projected image, whether the selected layer contains only an envelope region of a target object in the checked baggage includes: recognizing a number of envelope regions in the second projected image by using an image recognition algorithm; determining whether the number of envelope regions in the second projected image is 1; in a case that the number of envelope regions in the second projected image is 1, extracting an image feature of the envelope region in the second projected image; and determining that the selected layer contains only the envelope region of the target object when the image feature meets a predetermined condition.

According to embodiments of the present disclosure, the above-mentioned method further includes: when it is determined that the selected layer contains envelope regions of other objects in the checked baggage other than the target object based on the second projected image, generating a third projected image of the selected layer in a third direction; drawing a sub selected layer based on the third projected image, wherein an extension plane of the sub selected layer is parallel to the third direction; generating a fourth projected image of the sub selected layer in a fourth direction, wherein the fourth direction is substantially perpendicular to the extension plane of the sub selected layer; determining, based on the fourth projected image, whether the sub selected layer contains only the envelope region of the target object; and in a case that the sub selected layer contains only the envelope region of the target object, determining the sub selected layer as the target region.

According to embodiments of the present disclosure, the above-mentioned method further includes: after determining the selected layer as the target region, adding a label to the selected layer; and adding and storing the second three-dimensional volume data in association with the label into a predetermined storage region.

According to embodiments of the present disclosure, the above-mentioned acquiring first three-dimensional volume data of a checked baggage includes: acquiring the first three-dimensional volume data of the checked baggage by using a computed tomography device.

In another aspect of the present invention according to claim 9, an apparatus of positioning a target region is provided, including: an acquisition module, a first projection module, a drawing module, a second projection module, a determination module and a positioning module. The acquisition module is configured to acquire first three-dimensional volume data of a checked baggage. The first projection module is configured to generate a first projected image of the checked baggage in a first direction based on the first three-dimensional volume data. The drawing module is configured to draw a selected layer based on the first projected image, wherein an extension plane of the selected layer is parallel to the first direction. The second projection module is configured to generate a second projected image of the selected layer in a second direction, wherein the second direction is substantially perpendicular to the extension plane of the selected layer. The determination module is configured to determine, based on the second projected image, whether the selected layer contains only an envelope region of a target object in the checked baggage. The positioning module is configured to determine the selected layer as the target region when the selected layer contains only the envelope region of the target object.

In another aspect of the present invention according to claim 10, an electronic device is provided, including a memory and at least one processor. The memory is configured to store instructions. The at least one processor executes the instructions stored in the memory, so as to implement the method as described in any of above-mentioned embodiments.

In another aspect of the present invention according to claim 11, a computer-readable storage medium having computer instructions stored thereon is provided, and the computer instructions, when executed by a processor, implement the method as described in any of above-mentioned embodiments.

In another aspect of the present invention according to claim 12, a computer program product including executable instructions is provided, and the executable instructions, when executed by a processor, implement the method as described in any of above-mentioned embodiments.

### BRIEF DESCRIPTION OF THE DRAWINGS

In order to better understand embodiments of the present disclosure, embodiments of the present disclosure will be described in detail according to the following accompanying drawings:
FIG. 1 schematically shows an application scenario of a method and an apparatus of positioning a target region according to an embodiment of the present disclosure;
FIG. 2 schematically shows a flowchart of a method of positioning a target region according to an example useful for understanding but not forming part of the present invention;
FIG. 3A to FIG. 3B schematically show example diagrams of a first projected image and a second projected image according to an embodiment of the present disclosure;
FIG. 3C to FIG. 3D schematically show example diagrams of a first projected image and a second projected image according to another embodiment of the present disclosure;
FIG. 4 schematically shows a flowchart of a method of positioning a target region according to the present invention;
FIG. 5A schematically shows an example diagram of a rectangular two-dimensional region according to an embodiment of the present disclosure;
FIG. 5B schematically shows an example diagram of a selected layer according to an embodiment of the present disclosure;
FIG. 6 schematically shows an example flowchart of a method of positioning a target region according to another embodiment of the present disclosure;
FIG. 7 schematically shows an example flowchart of a method of positioning a target region according to another embodiment of the present disclosure;
FIG. 8 schematically shows a block diagram of an apparatus of positioning a target region according to an embodiment of the present disclosure; and
FIG. 9 schematically shows a block diagram of an electronic device according to an embodiment of the present disclosure.

### DETAILED DESCRIPTION OF EMBODIMENTS

Specific embodiments of the present disclosure will be described in detail below. It should be noted that embodiments described here are for illustrative purposes only and are not intended to limit embodiments of the present disclosure. In the following descriptions, in order to provide a thorough understanding of embodiments of the present disclosure, a large number of specific details are set forth. However, it is obvious to those skilled in the art that: it is not necessary to implement embodiments of the present disclosure with the specific details. In other examples, well-known structures, materials, or methods are not specifically described to avoid confusion with embodiments of the present disclosure.

Throughout the specification, a reference to "an embodiment", "embodiments", "an example" or "examples" means that: specific features, structures or characteristics described in combination with the embodiment(s) or example(s) are included in at least one embodiment of the present disclosure. Therefore, phrases "in an embodiment", "in embodiments", "an example" or "examples" present throughout the specification do not necessarily refer to the same embodiment or example. In addition, the specific features, structures, or characteristics may be combined in one or more embodiments or examples in any appropriate combination and/or subcombination. In addition, those skilled in the art should understand that a term "and/or" used herein includes any and all combinations of one or more related listed items.

Embodiments of the present disclosure provide a method and an apparatus of positioning a target region, a device, a medium and a program product. The method of positioning the target region includes an acquisition process, a first projection process, a drawing process, a second projection process, a determination process and a positioning process. In the acquisition process, first three-dimensional volume data of a checked baggage is acquired. Then, the first projection process is performed, in which a first projected image of the checked baggage in a first direction is generated based on the first three-dimensional volume data. In the drawing process, a selected layer is drawn on the first projected image, and the selected layer is parallel to the first direction. Then, the second projection process is performed, in which a second projected image of the selected layer in a second direction is generated, and the second direction is substantially perpendicular to the selected layer. In the determination process, whether the selected layer contains only an envelope region of a target object in the checked baggage is determined based on the second projected image. In a case that the selected layer contains only the envelope region of the target object in the checked baggage, the positioning process is performed, in which the selected layer is determined as the target region.

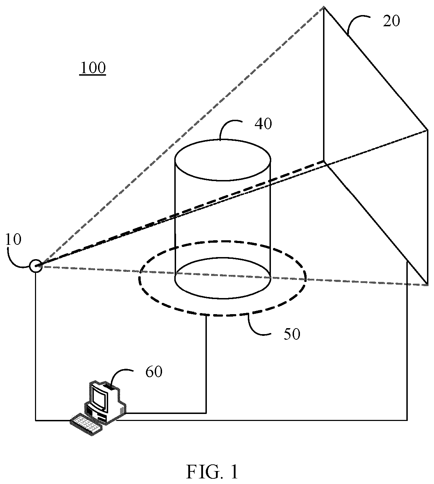

FIG. 1 schematically shows an application scenario of a method and an apparatus of positioning a target region according to an embodiment of the present disclosure. It should be noted that FIG. 1 is only an example of a scenario in which embodiments of the present disclosure may be applied so as to help those skilled in the art understand the technical contents of the present disclosure, but it does not mean that embodiments of the present disclosure may not be applied to other devices, systems, environments or scenarios.

As shown in FIG. 1, the application scenario exemplarily shows a structural diagram of an electronic device 100. In the example, the electronic device 100 is a CT (Computed Tomography) device. In other examples, the electronic device 100 may be a single energy X-ray testing device, a dual energy X-ray testing device, etc. which will not be limited here. According to embodiments of the present disclosure, the CT device 100 may include an X-ray source 10, a mechanical motion device 50, a detector and a data acquisition system 20, and a control and data processing device 60. The CT device 100 is used to perform CT scanning and data processing on a checked object 40, such as a checked baggage, so as to identify and locate a target object (such as dangerous goods, illegal goods, etc.) in the checked baggage.

The X-ray source 10 may be, for example, an X-ray machine, and an appropriate focus size of the X-ray machine may be selected according to an imaging resolution. In other embodiments, an X-ray beam may be generated by using a linear accelerator or the like instead of using the X-ray machine.

The mechanical motion device 50 includes a stage, a rack, a control system, etc. The stage may be translated to adjust a position of a rotation center, and the rack may be translated to align the X-ray source (X-ray machine) 10, the detector and the rotation center. The embodiment is described according to a circular scanning track or a spiral track of rotating the stage and fixing the rack. Since a movement of the stage and the rack belongs to a relative movement, the method of the embodiment may also be achieved by a way that the stage is stationary and the rack is rotated.

The detector and the data acquisition system 20 include an X-ray detector, a data acquisition circuit, etc. The X-ray detector may use a solid detector, a gas detector or other detectors. However, embodiments of the present disclosure are not limited to this. The data acquisition circuit includes a readout circuit, an acquisition trigger circuit and a data transmission circuit, etc.

The control and data processing device 60 includes, for example, a computer device equipped with a control program and a data processing program. The control and data processing device 60 may be responsible for controlling an operation process of the CT device, including a mechanical translation, a mechanical rotation, an electrical control, a safety interlock control, etc., and may also process collected data.

It should be noted that the method of positioning the target region provided by embodiments of the present disclosure may generally be executed by the control and data processing device 60. Accordingly, the apparatus of positioning the target region provided by embodiments of the present disclosure may be provided in the control and data processing device 60. Alternatively, the method of positioning the target region provided by embodiments of the present disclosure may also be executed by a server or a server cluster that is different from the control and data processing device 60 and capable of communicating with the control and data processing device 60. Accordingly, the apparatus of positioning the target region provided by embodiments of the present disclosure may also be provided in the server or the server cluster that is different from the control and data processing device 60 and capable of communicating with the control and data processing device 60.

Based on the above-mentioned application scenarios, it is desired to determine whether a target object exists in the checked baggage when a security check is conducted on the checked baggage, and a target region where the target object is located is determined when the target object exists in the checked baggage. In one processing mode, a transparent region in three-dimensional volume data of the checked baggage is eliminated by a volume rendering method such as ray casting, and a region where the target object is located is selected within a transmission range of different rays, so that a bounding box tightly enveloping the target object is finally acquired and an influence of other surrounding regions is eliminated. The process is tedious and requires a long time to implement. When objects in the checked baggage block each other, a region where other objects block the target object may be selected by mistake, so that a target region positioning may not be achieved accurately and efficiently.

According to embodiments of the present disclosure, a method of positioning a target region is provided to further improve an efficiency and an accuracy of the target region positioning. The method will be exemplarily described below through the following drawings. It should be noted that the serial number of each operation in the following method is only used as a representation of the operation for the ease of description, and should not be considered as an execution order of each operation. Unless explicitly indicated, the method does not need to be executed exactly in the order shown.

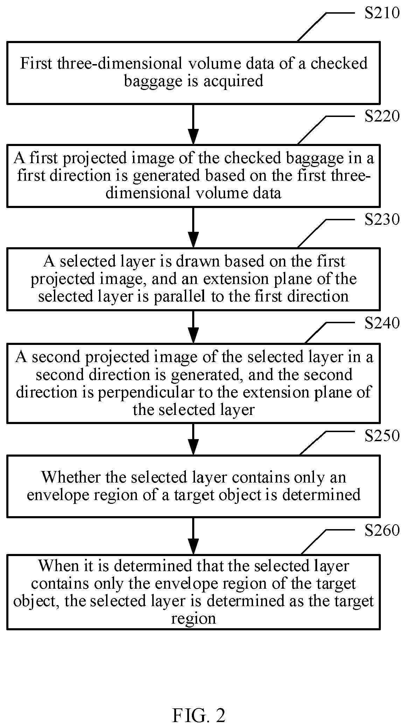

FIG. 2 schematically shows a flowchart of a method of positioning a target region according to an embodiment of the present disclosure.

As shown in FIG. 2, the method may include the following operations S210 to S260.

In operation S210, first three-dimensional volume data of a checked baggage is acquired.

Three-dimensional volume data may be a three-dimensional uniformly distributed data set, that is, a structural data set composed of three-dimensional meshes. The first three-dimensional volume data of the checked baggage may be acquired through a variety of detection methods, such as the above-mentioned computed tomography, X-ray detection technology, etc., which will not be limited here.

In operation S220, a first projected image of the checked baggage in a first direction is generated based on the first three-dimensional volume data.

The first direction may be any direction, and a direction may be selected without any limit. As an example, the projected image may be a DR (Digital Radiography) image.

In operation S230, a selected layer is drawn based on the first projected image, and an extension plane of the selected layer is parallel to the first direction.

As an example, the first three-dimensional volume data of the checked baggage may correspond to a plurality of image layers, and the above-mentioned selected layer may be composed of one or more consecutive image layers in the plurality of image layers. The one or more consecutive image layers included in the selected layer are parallel to the first direction.

In operation S240, a second projected image of the selected layer in a second direction is generated, and the second direction is substantially perpendicular to the extension plane of the selected layer.

As an example, after the selected layer is determined, it may be determined that a direction that is substantially perpendicular to the extension plane of the selected layer is the second direction, that is, the second direction is substantially perpendicular to the one or more consecutive image layers included in the selected layer. Thus, the second projected image of the selected layer in the second direction may be generated. In embodiments of the present disclosure, the first projected image and the second projected image may both be projected images with a perspective effect that are built based on a perspective projection model.

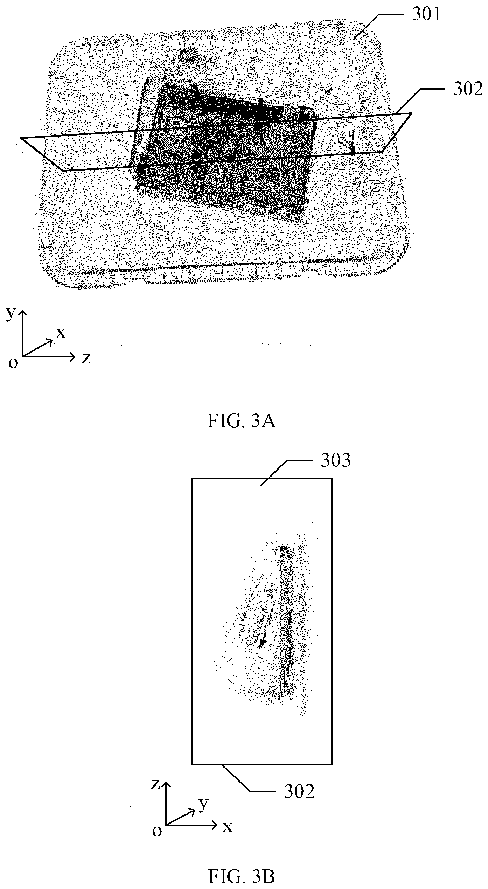

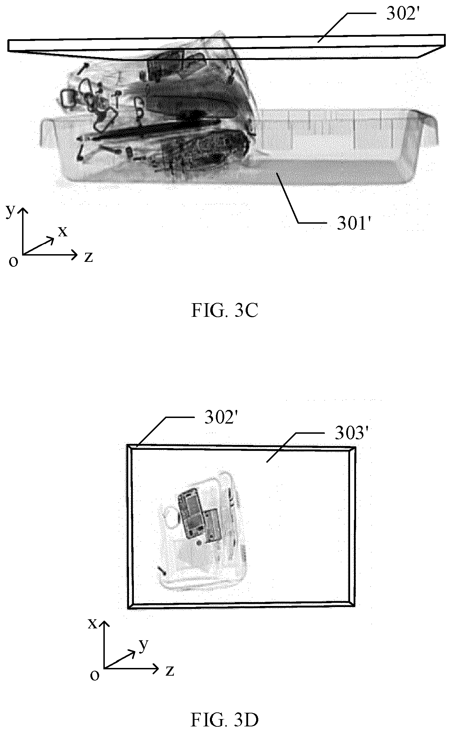

The first projected image and the second projected image will be illustrated below with reference to FIG. 3A to FIG. 3D. FIG. 3A schematically shows an example diagram of a first projected image according to an embodiment of the present disclosure, and FIG. 3B schematically shows an example diagram of a second projected image according to an embodiment of the present disclosure. FIG. 3C schematically shows an example diagram of a first projected image according to another embodiment of the present disclosure, and FIG. 3D schematically shows an example diagram of a second projected image according to another embodiment of the present disclosure. The first projected image and the second projected image shown in the example are displayed as grayscale images. In other examples, the first projected image and the second projected image may also be displayed as pseudo color images according to various color models (such as a HSV (Hue, Saturation, Value) color model, a RGB (Red, Green, Blue) color model, etc.).

In the examples shown in FIG. 3A to FIG. 3B, for example, in an o-xyz coordinate system, an x direction is the first direction and a y direction is the second direction. FIG. 3A shows a first projected image 301 of the checked baggage in the first direction. In the first projected image 301, the first direction is a direction perpendicular to a paper surface. A selected layer 302 is drawn based on the first projected image 301, and an extension plane of the selected layer 302 is parallel to the first direction. In the example, the selected layer 302 may be composed of only one image layer, and the image layer extends perpendicular to the paper surface. At this time, a thickness of the selected layer 302 is 1 pixel. A second direction that is substantially perpendicular to the extension plane of the selected layer 302 may be determined according to the selected layer 302 shown on a left side of FIG. 3A. For example, in the example, the second direction may be a direction upward or downward parallel to the paper surface. In other examples, the second direction changes with a change of the selected layer 302. Thus, a second projected image 303 of the selected layer 302 in the second direction may be generated, and the second projected image 303 is shown in FIG. 3B. Since the selected layer 302 in the example contains only one image layer, the second projected image 303 of the selected layer 302 in the second direction substantially shows a pixel value distribution of the image layer.

In the examples shown in FIG. 3C to FIG. 3D, for example, in the o-xyz coordinate system, the x direction is the first direction and the y direction is the second direction. FIG. 3C shows a first projected image 301' of the checked baggage in the first direction. In the first projected image 301', the first direction is perpendicular to the paper surface. A selected layer 302' is drawn based on the first projected image 301'. In the example, the selected layer 302' may be composed of N consecutive image layers, and the N consecutive image layers extend perpendicular to the paper surface. At this time, a thickness of the selected layer 302' is N pixels, and N is an integer greater than 1. A second direction that is substantially perpendicular to an extension plane of the selected layer 302' may be determined according to the selected layer 302' shown in FIG. 3C. Thus, a second projected image 303' of the selected layer 302' in the second direction may be generated, and the second projected image 303' is shown in FIG. 3D.

As shown in FIG. 3A to FIG. 3D, since the second projected image is generated according to the selected layer, the second projected image may also change accordingly with a change of a position and/or thickness of the selected layer drawn based on the first projected image. The second projected image will reflect contents contained in the selected layer drawn based on the first projected image. Therefore, according to embodiments of the present disclosure, the first projected image may be used as a main view, the second projected image may be used as an auxiliary view, and the second projected image may be used to assist in determining whether the selected layer drawn based on the first projected image is the region where the target object is located. Now continue to refer to FIG. 2.

In operation S250, whether the selected layer contains only an envelope region of a target object in the checked baggage is determined based on the second projected image. In a case that the selected layer contains only the envelope region of the target object in the checked baggage, operation S260 is performed.

In operation S260, when it is determined that the selected layer contains only the envelope region of the target object in the checked baggage, the selected layer is determined as the target region.

In the above-mentioned operations S250 to S260, as an example, the second projected image may be recognized through image processing and a computer vision algorithm so as to determine whether the selected layer uniquely contains the envelope region of the target object. The selected layer that uniquely contains the envelope region of the target object is determined as the target region.

Those skilled in the art may understand that, according to the method of positioning the target region according to embodiments of the present disclosure, the first projected image is used as the main view, the second projected image is used as the auxiliary view, and the second projected image is used to assist in determining a distribution range of the selected layer drawn based on the first projected image. When it is determined that the selected layer uniquely contains the envelope region of the target object, the selected layer is determined as the target region. A recognition and a monitoring of the selected layer are completed under two perspectives of the first projected image and the second projected image, which may avoid a false recognition as much as possible. In addition, since the second projected image completely eliminates an influence of other regions other than the selected layer, whether the selected layer drawn in the first projected image is the target region may be quickly and accurately determined based on the second projected image, so that an efficiency and an accuracy of target region positioning may be improved.

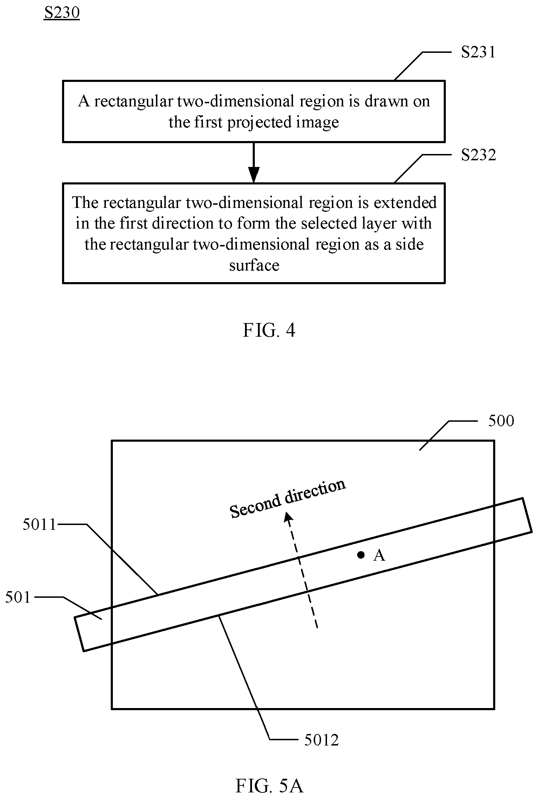

FIG. 4 schematically shows an example flowchart of a method of positioning a target region, which is used to illustrate the above-mentioned operation S230 according to the present invention.

As shown in FIG. 4, the above-mentioned process of drawing the selected layer based on the first projected image includes operations S231 to S232.

In operation S231, a rectangular two-dimensional region is drawn on the first projected image.

As an example, according to embodiments of the present disclosure, the above-mentioned process of forming the rectangular two-dimensional region in the first projected image may include: generating, based on a first trigger operation for a designated point in the first projected image, a rectangular two-dimensional region including the designated point. The rectangular two-dimensional region of the present invention includes a first long side and a second long side. The rectangular two-dimensional region may be drawn arbitrarily in the first projected image as required, which will not be limited here.

FIG. 5A schematically shows an example diagram of a rectangular two-dimensional region according to an embodiment of the present disclosure. As shown in FIG. 5A, for example, the first trigger operation may be a click operation. After a first projected image 500 of the checked baggage in the first direction is generated, the first projected image 500 is displayed. It may be understood that in the example shown in FIG. 5A, the first direction is perpendicular to the paper surface. When a user pays more attention to a certain region in the first projected image (for example, when the user thinks that a certain region of the first projected image is suspected to be the target object), the user may click any point in the region as the designated point. In response to a user's click operation on a designated point A on the first projected image 500, a rectangular two-dimensional region 501 including the designated point A is generated. The rectangular two-dimensional region includes a first long side 5011 and a second long side 5012.

In another embodiment of the present disclosure, the above-mentioned process of forming the rectangular two-dimensional region in the projected image may also include: forming, based on a user's operation of drawing a closed track in the first projected image, a rectangular two-dimensional region with the closed track as a boundary in the projected image.

Continuing to refer to FIG. 4, in operation S232, the rectangular two-dimensional region is extended in the first direction to form the selected layer with the rectangular two-dimensional region as a side surface.

The first long side and the second long side of the rectangular two-dimensional region form a first surface and a second surface of the selected layer respectively, the first surface and the second surface are parallel to the first direction, and the second direction is substantially perpendicular to the first surface and the second surface.

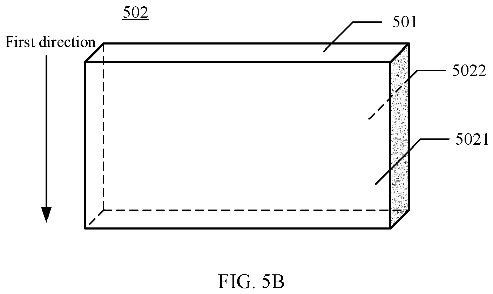

FIG. 5B schematically shows an example diagram of a selected layer according to an embodiment of the present disclosure. As shown in FIG. 5B, after the rectangular two-dimensional region 501 is formed, the rectangular two-dimensional region 501 is extended in the first direction to form a selected layer 502 with the rectangular two-dimensional region 501 as the side surface. The selected layer 502 includes a first surface 5021 and a second surface 5022 opposite to each other. In the example, it may be determined that a direction substantially perpendicular to the first surface 5021 and the second surface 5022 is the second direction.

According to embodiments of the present disclosure, the above-mentioned process of generating the second projected image of the selected layer in the second direction includes: segmenting second three-dimensional volume data for the selected layer from the first three-dimensional volume data; and generating the second projected image of the selected layer in the second direction based on the second three-dimensional volume data.

In the example shown in FIG. 5B, in the first three-dimensional volume data of the checked baggage, three-dimensional volume data for the selected layer 502 may be used as the second three-dimensional volume data segmented from the first three-dimensional volume data.

The rectangular two-dimensional region is formed according to the user's first trigger operation for the first projected image, which indicates that an actual position of the target object should be in a depth direction (first direction) of the rectangular two-dimensional region. Therefore, if the rectangular two-dimensional region is extended in the depth direction, the selected layer formed may contain the region where the target object is located with a high probability, and the region where the target object is located may not be deleted by mistake while reducing a positioning range. Further, the target region may be quickly and accurately located by determining the contents contained in the selected layer from the perspective of the second projected image (using the second direction as the depth direction).

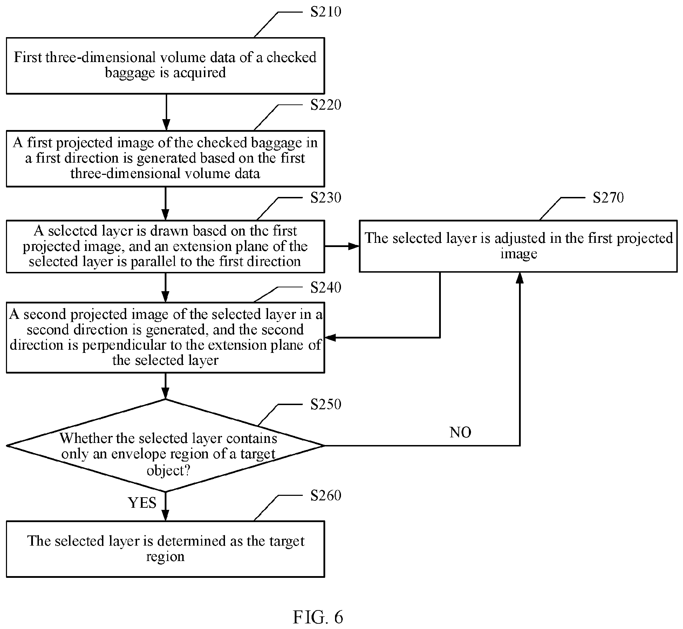

FIG. 6 schematically shows an example flowchart of a method of positioning a target region according to another embodiment of the present disclosure. Compared with the embodiment shown in FIG. 2, a difference is that, after drawing the selected layer, the method of positioning the target region shown in FIG. 6 may further include: operating S270 in which the selected layer is adjusted in the first projected image. Operation S240 is repeated each time after the selected layer is adjusted, so as to update the second projected image of the selected layer in the second direction accordingly.

In addition, when the selected layer determined based on the second projected image does not only contain the envelope region of the target object in operation S250, the process may return to operation S270 and continue to adjust the selected layer.

As an example, the method of adjusting the selected layer in the above-mentioned operation S270 may include the following two methods, so that the distribution range of the selected layer in the first three-dimensional volume data may be changed.

The method 1: a thickness of the selected layer is fixed, and a position of the selected layer is adjusted in the second direction. For example, a thickness value of the selected layer is equal to a preset initial value in a configuration table. In the first projected image as shown in FIG. 5A, a width of the rectangular two-dimensional region 501 is kept unchanged, a position of the rectangular two-dimensional region 501 is adjusted in the second direction, and the first long side 5011 and the second long side 5012 move synchronously during the adjustment.

The method 2: the thickness of the selected layer is not fixed, and positions of the first surface and the second surface of the selected layer are respectively adjusted in the second direction. For example, in the first projected image shown in FIG. 5A, a position of the first long side 5011 of the rectangular two-dimensional region 501 is adjusted in the second direction, and a position of the second long side 5012 of the rectangular two-dimensional region 501 is adjusted in the second direction.

The above-mentioned adjustment process may be automatically performed by a computer device, for example, a moving object is set to be the first long side and/or the second long side, a moving direction is set to be the second direction, and each moving step size is set to be a predetermined number of pixels. After a predetermined number of movements, it is determined that operation S270 is completed. By constantly adjusting the selected layer, the target region that more closely wraps the target object may be positioned.

According to embodiments of the present disclosure, the above-mentioned process of determining, based on the second projected image, whether the selected layer contains only the envelope region of the target object in the checked baggage may include: recognizing a number of envelope regions in the second projected image by using an image recognition algorithm; and determining whether the number of envelope regions in the second projected image is 1. In a case that the number of envelope regions in the second projected image is 1, it is indicated that the selected layer contains only one envelope region, and then an image feature of the envelope region is extracted according to a distribution of pixel values in the envelope region, for example, one or more image features such as a density feature, an atomic sequence feature, a key point feature, etc. of the envelope region are extracted. When the extracted image feature meets a predetermined condition, it is determined that the selected layer contains only the envelope region of the target object. As an example, the predetermined condition may be one or more image features of a pre-stored target object, and the extracted image feature may be matched with the pre-stored image feature. When the extracted image feature and the pre-stored image feature are successfully matched, it is determined that the extracted image feature meets the predetermined condition, and it is indicated that the unique envelope region in the selected layer is the envelope region of the target object, so that the selected layer is determined as the target region.

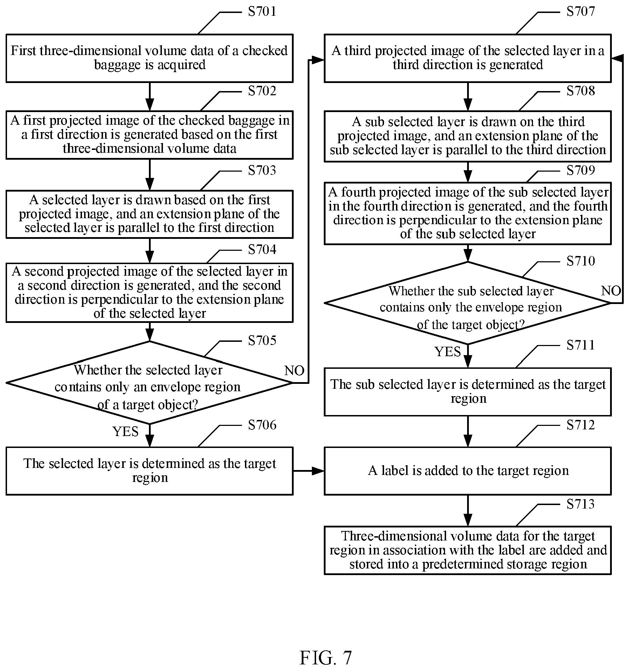

FIG. 7 schematically shows an example flowchart of a method of positioning a target region according to another embodiment of the present disclosure.

As shown in FIG. 7, the method may include operations S701 to S711. Operations S701 to S706 may be implemented in the same way as operations S210 to S260 shown in FIG. 2, which will not be repeated here. In operation S706, operation S707 is performed when it is determined that the selected layer contains envelope regions of other objects in the checked baggage other than the target object based on the second projected image.

In operation S707, a third projected image of the selected layer in a third direction is generated.

The third direction may be selected as required. When the third direction is the same as the second direction, the third projected image is the same as the second projected image, and the second projected image that has been generated may be directly acquired.

In operation S708, a sub selected layer is drawn based on the third projected image, and an extension plane of the sub selected layer is parallel to the third direction.

The process is the same as a principle of drawing the selected layer based on the first projected image, which has been described in detail above and will not be repeated here.

In operation S709, a fourth projected image of the sub selected layer in a fourth direction is generated, and the fourth direction is substantially perpendicular to the extension plane of the sub selected layer.

The process is the same as a principle of generating the second projected image described above, which will not be repeated here.

Next, in operation S710, whether the sub selected layer contains only the envelope region of the target object is determined based on the fourth projected image. The determination process is the same as a principle of determining, based on the second projected image, whether the selected layer contains only the envelope region of the target object described above, which will not be repeated here. In a case that the sub selected layer contains only the envelope region of the target object, operation S711 is performed. In a case that the sub selected layer does not contain only the envelope region of the target object, the sub selected layer is re-determined according to the above-mentioned logic until the sub selected layer that contains only the envelope region of the target object is positioned.

In operation S711, the sub selected layer is determined as the target region.

According to embodiments of the present disclosure, the method of positioning the target region shown in FIG. 7 may further include: in operation S712, adding a label to the target region after determining the target region. In operation S713, three-dimensional volume data for the target region in association with the label are added and stored to a predetermined storage region. As an example, when it is determined that the selected layer is the target region, the three-dimensional volume data for the target region is the second three-dimensional volume data described above. Similarly, when a sub selected layer is determined as the target region, three-dimensional volume data for the sub selected layer is segmented from the first three-dimensional volume data to serve as the three-dimensional volume data of the target region. Contents of the label may be, for example, an identifier, identification information, etc., to indicate that three-dimensional volume data stored in associated with the label is the three-dimensional volume data of the target region.

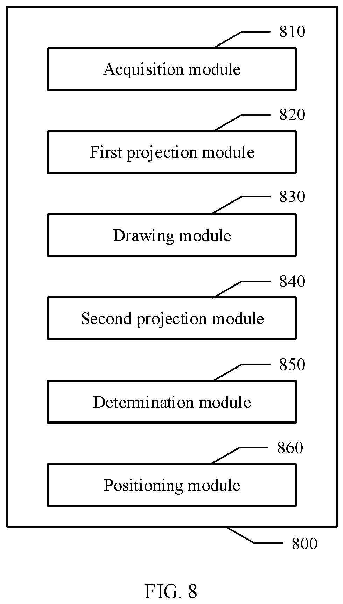

FIG. 8 schematically shows a block diagram of an apparatus of positioning a target region according to an embodiment of the present disclosure.

As shown in FIG. 8, an apparatus 800 of positioning a target region may include: an acquisition module 810, a first projection module 820, a drawing module 830, a second projection module 840, a determination module 850, and a positioning module 860.

The acquisition module 810 is used to acquire first three-dimensional volume data of a checked baggage.

The first projection module 820 is used to generate a first projected image of the checked baggage in a first direction based on the first three-dimensional volume data.

The drawing module 830 is used to draw a selected layer based on the first projected image, and an extension plane of the selected layer is parallel to the first direction.

The second projection module 840 is used to generate a second projected image of the selected layer in a second direction, and the second direction is substantially perpendicular to the extension plane of the selected layer.

The determination module 850 is used to determine, based on the second projected image, whether the selected layer contains only an envelope region of a target object in the checked baggage.

The positioning module 860 is used to determine the selected layer as the target region when the selected layer contains only the envelope region of the target object.

It should be noted that the implementation mode, solved technical problems, achieved functions, and achieved technical effects of each module/unit/subunit in the embodiment of the apparatus portion are the same or similar to the implementation mode, solved technical problems, achieved functions, and achieved technical effects of each corresponding step in the embodiment of the method portion, which will not be repeated here.

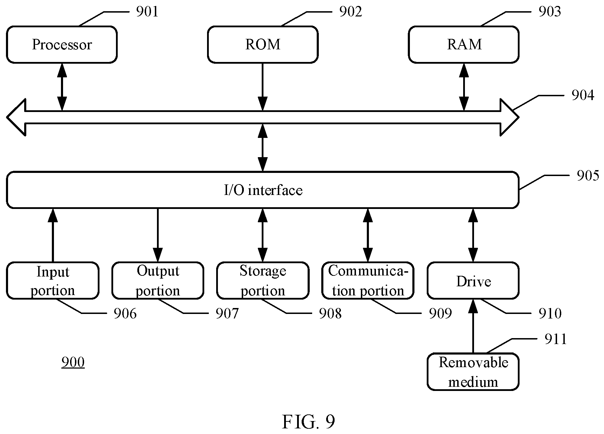

FIG. 9 schematically shows a block diagram of an electronic device according to the present invention for implementing the method of the present invention described above. The device shown in FIG. 9 is only an example, and is not intended to limit the function and scope of use of embodiments of the present disclosure.

As shown in FIG. 9, a device 900 according to embodiments of the present disclosure includes a processor 901, which may perform various appropriate actions and processes according to a program stored in a read only memory (ROM) 902 or a program loaded from a storage portion 908 into a random access memory (RAM) 903. The processor 901 may include, for example, a general-purpose microprocessor (such as a CPU), an instruction set processor and/or a related chipset and/or a dedicated-purpose microprocessor (such as an application specific integrated circuit (ASIC)), etc. The processor 901 may also include an on-board memory for caching purposes. The processor 901 may include a single processing unit or a plurality of processing units for performing different actions of a method flow according to embodiments of the present disclosure.

In the RAM 903, various programs and data required for an operation of the device 900 are stored. The processor 901, the ROM 902 and the RAM 903 are connected to each other via a bus 904. The processor 901 performs various operations of the method flow according to embodiments of the present disclosure by executing programs in the ROM 902 and/or RAM 903. It should be noted that the programs may also be stored in one or more memories other than the ROM 902 and RAM 903. The processor 901 may also perform various operations of the method flow according to embodiments of the present disclosure by executing the programs stored in the one or more memories.

According to embodiments of the present disclosure, the device 900 may also include an input/output (I/O) interface 905, which is also connected to the bus 904. The device 900 may also include one or more of the following components connected to the I/O interface 905: an input portion 906 including a keyboard, a mouse, etc.; an output portion 907 such as a cathode ray tube (CRT), a liquid crystal display (LCD), etc., and a loudspeaker, etc.; a storage portion 908 including a hard disk, etc.; and a communication portion 909 including a network interface card such as a LAN card, a modem, etc.. The communication portion 909 performs communication processing via a network such as the internet. A drive 910 is also connected to the I/O interface 905 as required. A removable medium 911, such as a magnetic disk, optical disk, magneto-optical disk, semiconductor memory, etc., is installed on the drive 910 as required, so that computer programs read therefrom may be installed into the storage portion 908 as required.

According to embodiments of the present invention, the method flow according to embodiments of the present disclosure is also implemented as a computer software program. The present invention also includes a computer program product, which includes a computer program loaded on a computer-readable storage medium, and the computer program includes a program code for performing the method of the present invention shown in the flowchart. In the embodiment, the computer program may be downloaded and installed from the network through the communication portion 909, and/or installed from the removable media 911. When the computer program is executed by the processor 901, the above-mentioned functions defined in the system of embodiments of the present disclosure are performed. According to embodiments of the present disclosure, the system, device, apparatus, module, unit and the like as described above may be achieved by a computer program module.

According to embodiments of the present disclosure, the above-mentioned electronic device may be used to achieve the method of positioning the target region according to embodiments of the present disclosure.

The present disclosure further provides a computer-readable storage medium, which may be included in the device/apparatus/system described in the above-mentioned embodiment; the computer-readable storage medium may also exist alone without being assembled into the device/apparatus/system. The above-mentioned computer-readable storage medium carries one or more programs. The one or more programs, when executed, implement the method according to embodiments of the present disclosure.

The flowcharts and block diagrams in the accompanying drawings illustrate possible architectures, functions, and operations of systems, methods, and computer program products according to various embodiments of the present disclosure. In this regard, each block in the flowchart or block diagram may represent a module, program segment, or a portion of a code, and the above-mentioned module, program segment, or portion of the code contains one or more executable instructions for implementing a specified logical function. It should also be noted that in some alternative implementations, functions marked in the block may also occur in a different order from that marked in the drawings. For example, two consecutive blocks may actually be executed substantially in parallel, or they may sometimes be executed in a reverse order, which may depend on the functions involved. It should also be noted that each block in the block diagram or flowchart, and a combination of the blocks in the block diagram or flowchart, may be implemented with a dedicated-purpose hardware-based system that performs a specified function or operation, or may be implemented with a combination of a dedicated-purpose hardware and computer instructions.

Those skilled in the art may understand that, although the present disclosure has been shown and described with reference to specific exemplary embodiments of the present disclosure, they should understand that the present disclosure may be changed in form and detail within the scope defined by the appended claims.

## Claims

1. A computer-implemented method of positioning a target region, comprising:
acquiring (S210, S701) first three-dimensional volume data of a checked baggage;
generating (S220, S702) a first projected image of the checked baggage in a first direction based on the first three-dimensional volume data;
drawing (S230, S703) a selected layer based on the first projected image, wherein an extension plane of the selected layer is parallel to the first direction;
generating (S240, S704) a second projected image of the selected layer in a second direction, wherein the second direction is substantially perpendicular to the extension plane of the selected layer;
determining (S250, S705), based on the second projected image, whether the selected layer contains only an envelope region of a target object in the checked baggage; and
in a case that the selected layer contains only the envelope region of the target object in the checked baggage, determining (S260, S706) the selected layer as the target region,
**characterized in that**
the drawing (S230, S703) a selected layer based on the first projected image comprises:
drawing (S231) a rectangular two-dimensional region on the first projected image; and
extending (S232) the rectangular two-dimensional region in the first direction to form the selected layer with the rectangular two-dimensional region as a side surface, wherein a first long side and a second long side of the rectangular two-dimensional region form a first surface and a second surface of the selected layer respectively, the first surface and the second surface are parallel to the first direction, and the second direction is substantially perpendicular to the first surface and the second surface.

2. The method according to claim 1, further comprising:
after drawing (S231) the rectangular two-dimensional region, keeping a width of the rectangular two-dimensional region unchanged, and adjusting a position of the rectangular two-dimensional region in the second direction.

3. The method according to claim 1, further comprising:
after drawing (S231) the rectangular two-dimensional region,
adjusting a position of the first long side of the rectangular two-dimensional region in the second direction; and
adjusting a position of the second long side of the rectangular two-dimensional region in the second direction.

4. The method according to claim 1, wherein the generating (S240, S704) a second projected image of the selected layer in a second direction comprises:
segmenting second three-dimensional volume data for the selected layer from the first three-dimensional volume data; and
generating the second projected image of the selected layer in the second direction based on the second three-dimensional volume data.

5. The method according to claim 1, wherein the determining (S250, S705), based on the second projected image, whether the selected layer contains only an envelope region of a target object in the checked baggage comprises:
recognizing a number of envelope regions in the second projected image by using an image recognition algorithm;
determining whether the number of envelope regions in the second projected image is 1;
in a case that the number of envelope regions in the second projected image is 1, extracting an image feature of the envelope region in the second projected image; and
determining that the selected layer contains only the envelope region of the target object when the image feature meets a predetermined condition.

6. The method according to claim 1, further comprising: when it is determined that the selected layer contains envelope regions of other objects in the checked baggage other than the target object based on the second projected image,
generating (S707) a third projected image of the selected layer in a third direction;
drawing (S708) a sub selected layer based on the third projected image, wherein an extension plane of the sub selected layer is parallel to the third direction;
generating (S709) a fourth projected image of the sub selected layer in a fourth direction, wherein the fourth direction is substantially perpendicular to the extension plane of the sub selected layer;
determining (S710), based on the fourth projected image, whether the sub selected layer contains only the envelope region of the target object; and
in a case that the sub selected layer contains only the envelope region of the target object, determining (S711) the sub selected layer as the target region.

7. The method according to claim 4, further comprising: after determining the selected layer as the target region,
adding (S712) a label to the selected layer; and
adding and storing (S713) the second three-dimensional volume data in association with the label into a predetermined storage region.

8. The method according to claim 1, wherein the acquiring first three-dimensional volume data of a checked baggage comprises:
acquiring the first three-dimensional volume data of the checked baggage by using a computed tomography device.

9. An apparatus (800) of positioning a target region, comprising:
an acquisition module (810) configured to acquire first three-dimensional volume data of a checked baggage;
a first projection module (820) configured to generate a first projected image of the checked baggage in a first direction based on the first three-dimensional volume data;
a drawing module (830) configured to draw a selected layer based on the first projected image, wherein an extension plane of the selected layer is parallel to the first direction;
a second projection module (840) configured to generate a second projected image of the selected layer in a second direction, wherein the second direction is substantially perpendicular to the extension plane of the selected layer;
a determination module (850) configured to determine, based on the second projected image, whether the selected layer contains only an envelope region of a target object in the checked baggage; and
a positioning module (860) configured to determine the selected layer as the target region when the selected layer contains only the envelope region of the target object,
**characterized in that**
the drawing module (830) is further configured to:
draw a rectangular two-dimensional region on the first projected image; and
extend the rectangular two-dimensional region in the first direction to form the selected layer with the rectangular two-dimensional region as a side surface, wherein a first long side and a second long side of the rectangular two-dimensional region form a first surface and a second surface of the selected layer respectively, the first surface and the second surface are parallel to the first direction, and the second direction is substantially perpendicular to the first surface and the second surface.

10. A computer-readable storage medium (908) having computer instructions stored thereon, wherein the computer instructions, when executed by a processor, implement the method according to one of claims 1 to 8.

11. A computer program product comprising executable instructions, wherein the executable instructions, when executed by a processor, implement the method according to one of claims 1 to 8.

## Patentansprüche

1. Ein computerimplementiertes Verfahren zum Positionieren einer Zielregion, umfassend:
Erfassen (S210, S701) erster dreidimensionaler Volumendaten eines aufgegebenen Gepäckstücks;
Erzeugen (S220, S702) eines ersten projizierten Bildes des aufgegebenen Gepäckstücks in einer ersten Richtung basierend auf den ersten dreidimensionalen Volumendaten;
Zeichnen (S230, S703) einer ausgewählten Schicht basierend auf dem ersten projizierten Bild, wobei eine Erstreckungsebene der ausgewählten Schicht parallel zu der ersten Richtung ist;
Erzeugen (S240, S704) eines zweiten projizierten Bildes der ausgewählten Schicht in einer zweiten Richtung, wobei die zweite Richtung im Wesentlichen senkrecht zu der Erstreckungsebene der ausgewählten Schicht ist;
Bestimmen (S250, S705), basierend auf dem zweiten projizierten Bild, ob die ausgewählte Schicht nur einen Hüllbereich eines Zielobjekts in dem aufgegebenen Gepäckstück enthält; und
in einem Fall, dass die ausgewählte Schicht nur den Hüllbereich des Zielobjekts in dem aufgegebenen Gepäckstück enthält, Bestimmen (S260, S706) der ausgewählten Schicht als die Zielregion,
**dadurch gekennzeichnet, dass**
das Zeichnen (S230, S703) einer ausgewählten Schicht basierend auf dem ersten projizierten Bild umfasst:
Zeichnen (S231) einer rechteckigen zweidimensionalen Region auf dem ersten projizierten Bild; und
Erstrecken (S232) der rechteckigen zweidimensionalen Region in der ersten Richtung, um die ausgewählte Schicht mit der rechteckigen zweidimensionalen Region als einer Seitenfläche zu bilden, wobei eine erste lange Seite und eine zweite lange Seite der rechteckigen zweidimensionalen Region jeweils eine erste Fläche und eine zweite Fläche der ausgewählten Schicht bilden, die erste Fläche und die zweite Fläche parallel zu der ersten Richtung sind und die zweite Richtung im Wesentlichen senkrecht zu der ersten Fläche und der zweiten Fläche ist.

2. Das Verfahren nach Anspruch 1, ferner umfassend:
nach dem Zeichnen (S231) der rechteckigen zweidimensionalen Region, Beibehalten einer Breite der rechteckigen zweidimensionalen Region unverändert und Anpassen einer Position der rechteckigen zweidimensionalen Region in der zweiten Richtung.

3. Das Verfahren nach Anspruch 1, ferner umfassend:
nach dem Zeichnen (S231) der rechteckigen zweidimensionalen Region,
Anpassen einer Position der ersten langen Seite der rechteckigen zweidimensionalen Region in der zweiten Richtung; und
Anpassen einer Position der zweiten langen Seite der rechteckigen zweidimensionalen Region in der zweiten Richtung.

4. Das Verfahren nach Anspruch 1, wobei das Erzeugen (S240, S704) eines zweiten projizierten Bildes der ausgewählten Schicht in einer zweiten Richtung umfasst:
Segmentieren zweiter dreidimensionaler Volumendaten für die ausgewählte Schicht aus den ersten dreidimensionalen Volumendaten; und
Erzeugen des zweiten projizierten Bildes der ausgewählten Schicht in der zweiten Richtung basierend auf den zweiten dreidimensionalen Volumendaten.

5. Das Verfahren nach Anspruch 1, wobei das Bestimmen (S250, S705), basierend auf dem zweiten projizierten Bild, ob die ausgewählte Schicht nur einen Hüllbereich eines Zielobjekts in dem aufgegebenen Gepäckstück enthält, umfasst:
Erkennen einer Anzahl von Hüllbereichen in dem zweiten projizierten Bild unter Verwendung eines Bilderkennungsalgorithmus;
Bestimmen, ob die Anzahl von Hüllbereichen in dem zweiten projizierten Bild 1 ist;
in einem Fall, dass die Anzahl von Hüllbereichen in dem zweiten projizierten Bild 1 ist, Extrahieren eines Bildmerkmals des Hüllbereichs in dem zweiten projizierten Bild; und
Bestimmen, dass die ausgewählte Schicht nur den Hüllbereich des Zielobjekts enthält, wenn das Bildmerkmal eine vorbestimmte Bedingung erfüllt.

6. Das Verfahren nach Anspruch 1, ferner umfassend: wenn basierend auf dem zweiten projizierten Bild bestimmt wird, dass die ausgewählte Schicht Hüllbereiche anderer Objekte in dem aufgegebenen Gepäckstück außer dem Zielobjekt enthält,
Erzeugen (S707) eines dritten projizierten Bildes der ausgewählten Schicht in einer dritten Richtung;
Zeichnen (S708) einer untergeordneten ausgewählten Schicht basierend auf dem dritten projizierten Bild, wobei eine Erstreckungsebene der untergeordneten ausgewählten Schicht parallel zu der dritten Richtung ist;
Erzeugen (S709) eines vierten projizierten Bildes der untergeordneten ausgewählten Schicht in einer vierten Richtung, wobei die vierte Richtung im Wesentlichen senkrecht zu der Erstreckungsebene der untergeordneten ausgewählten Schicht ist;
Bestimmen (S710), basierend auf dem vierten projizierten Bild, ob die untergeordnete ausgewählte Schicht nur den Hüllbereich des Zielobjekts enthält; und
in einem Fall, dass die untergeordnete ausgewählte Schicht nur den Hüllbereich des Zielobjekts enthält, Bestimmen (S711) der untergeordneten ausgewählten Schicht als die Zielregion.

7. Das Verfahren nach Anspruch 4, ferner umfassend: nach dem Bestimmen der ausgewählten Schicht als die Zielregion,
Hinzufügen (S712) einer Kennzeichnung zu der ausgewählten Schicht; und
Hinzufügen und Speichern (S713) der zweiten dreidimensionalen Volumendaten in Verknüpfung mit der Kennzeichnung in einem vorbestimmten Speicherbereich.

8. Das Verfahren nach Anspruch 1, wobei das Erfassen erster dreidimensionaler Volumendaten eines aufgegebenen Gepäckstücks umfasst:
Erfassen der ersten dreidimensionalen Volumendaten des aufgegebenen Gepäckstücks unter Verwendung einer Computertomographie-Vorrichtung.

9. Eine Vorrichtung (800) zum Positionieren einer Zielregion, umfassend:
ein Erfassungsmodul (810), das konfiguriert ist, um erste dreidimensionale Volumendaten eines aufgegebenen Gepäckstücks zu erfassen;
ein erstes Projektionsmodul (820), das konfiguriert ist, um ein erstes projiziertes Bild des aufgegebenen Gepäckstücks in einer ersten Richtung basierend auf den ersten dreidimensionalen Volumendaten zu erzeugen;
ein Zeichenmodul (830), das konfiguriert ist, um eine ausgewählte Schicht basierend auf dem ersten projizierten Bild zu zeichnen, wobei eine Erstreckungsebene der ausgewählten Schicht parallel zu der ersten Richtung ist;
ein zweites Projektionsmodul (840), das konfiguriert ist, um ein zweites projiziertes Bild der ausgewählten Schicht in einer zweiten Richtung zu erzeugen, wobei die zweite Richtung im Wesentlichen senkrecht zu der Erstreckungsebene der ausgewählten Schicht ist;
ein Bestimmungsmodul (850), das konfiguriert ist, um basierend auf dem zweiten projizierten Bild zu bestimmen, ob die ausgewählte Schicht nur einen Hüllbereich eines Zielobjekts in dem aufgegebenen Gepäckstück enthält; und
ein Positionierungsmodul (860), das konfiguriert ist, um die ausgewählte Schicht als die Zielregion zu bestimmen, wenn die ausgewählte Schicht nur den Hüllbereich des Zielobjekts enthält,
**dadurch gekennzeichnet, dass**
das Zeichenmodul (830) ferner konfiguriert ist, um:
eine rechteckige zweidimensionale Region auf dem ersten projizierten Bild zu zeichnen; und
die rechteckige zweidimensionale Region in der ersten Richtung zu erstrecken, um die ausgewählte Schicht mit der rechteckigen zweidimensionalen Region als einer Seitenfläche zu bilden, wobei eine erste lange Seite und eine zweite lange Seite der rechteckigen zweidimensionalen Region jeweils eine erste Fläche und eine zweite Fläche der ausgewählten Schicht bilden, die erste Fläche und die zweite Fläche parallel zu der ersten Richtung sind und die zweite Richtung im Wesentlichen senkrecht zu der ersten Fläche und der zweiten Fläche ist.

10. Ein computerlesbares Speichermedium (908), auf dem Computeranweisungen gespeichert sind, wobei die Computeranweisungen, wenn sie durch einen Prozessor ausgeführt werden, das Verfahren nach einem der Ansprüche 1 bis 8 implementieren.

11. Ein Computerprogrammprodukt, umfassend ausführbare Anweisungen, wobei die ausführbaren Anweisungen, wenn sie durch einen Prozessor ausgeführt werden, das Verfahren nach einem der Ansprüche 1 bis 8 implementieren.

## Revendications

1. Procédé mis en œuvre par ordinateur de positionnement d'une région cible, comprenant :
acquérir (S210, S701) des premières données de volume tridimensionnel d'un bagage contrôlé ;
générer (S220, S702) une première image projetée du bagage contrôlé dans une première direction sur la base des premières données de volume tridimensionnel ;
tracer (S230, S703) une couche sélectionnée sur la base de la première image projetée, dans lequel un plan d'extension de la couche sélectionnée est parallèle à la première direction ;
générer (S240, S704) une deuxième image projetée de la couche sélectionnée dans une deuxième direction, dans lequel la deuxième direction est sensiblement perpendiculaire au plan d'extension de la couche sélectionnée ;
déterminer (S250, S705), sur la base de la deuxième image projetée, si la couche sélectionnée contient uniquement une région d'enveloppe d'un objet cible dans le bagage contrôlé ; et
dans un cas où la couche sélectionnée contient uniquement la région d'enveloppe de l'objet cible dans le bagage contrôlé, déterminer (S260, S706) la couche sélectionnée comme étant la région cible,
**caractérisé en ce que**
le traçage (S230, S703) d'une couche sélectionnée sur la base de la première image projetée comprend :
tracer (S231) une région bidimensionnelle rectangulaire sur la première image projetée ; et
étendre (S232) la région bidimensionnelle rectangulaire dans la première direction pour former la couche sélectionnée avec la région bidimensionnelle rectangulaire comme surface latérale, dans lequel un premier grand côté et un deuxième grand côté de la région bidimensionnelle rectangulaire forment respectivement une première surface et une deuxième surface de la couche sélectionnée, la première surface et la deuxième surface sont parallèles à la première direction, et la deuxième direction est sensiblement perpendiculaire à la première surface et à la deuxième surface.

2. Procédé selon la revendication 1, comprenant en outre :
après avoir tracé (S231) la région bidimensionnelle rectangulaire, maintenir inchangée une largeur de la région bidimensionnelle rectangulaire, et ajuster une position de la région bidimensionnelle rectangulaire dans la deuxième direction.

3. Procédé selon la revendication 1, comprenant en outre :
après avoir tracé (S231) la région bidimensionnelle rectangulaire,
ajuster une position du premier grand côté de la région bidimensionnelle rectangulaire dans la deuxième direction ; et
ajuster une position du deuxième grand côté de la région bidimensionnelle rectangulaire dans la deuxième direction.

4. Procédé selon la revendication 1, dans lequel la génération (S240, S704) d'une deuxième image projetée de la couche sélectionnée dans une deuxième direction comprend :
segmenter des deuxièmes données de volume tridimensionnel pour la couche sélectionnée à partir des premières données de volume tridimensionnel ; et
générer la deuxième image projetée de la couche sélectionnée dans la deuxième direction sur la base des deuxièmes données de volume tridimensionnel.

5. Procédé selon la revendication 1, dans lequel la détermination (S250, S705), sur la base de la deuxième image projetée, si la couche sélectionnée contient uniquement une région d'enveloppe d'un objet cible dans le bagage contrôlé comprend :
reconnaître un nombre de régions d'enveloppe dans la deuxième image projetée au moyen d'un algorithme de reconnaissance d'image ;
déterminer si le nombre de régions d'enveloppe dans la deuxième image projetée est 1 ;
dans un cas où le nombre de régions d'enveloppe dans la deuxième image projetée est 1, extraire une caractéristique d'image de la région d'enveloppe dans la deuxième image projetée ; et
déterminer que la couche sélectionnée contient uniquement la région d'enveloppe de l'objet cible lorsque la caractéristique d'image satisfait une condition prédéterminée.

6. Procédé selon la revendication 1, comprenant en outre : lorsqu'il est déterminé que la couche sélectionnée contient des régions d'enveloppe d'autres objets dans le bagage contrôlé autres que l'objet cible sur la base de la deuxième image projetée,
générer (S707) une troisième image projetée de la couche sélectionnée dans une troisième direction ;
tracer (S708) une sous-couche sélectionnée sur la base de la troisième image projetée, dans lequel un plan d'extension de la sous-couche sélectionnée est parallèle à la troisième direction ;
générer (S709) une quatrième image projetée de la sous-couche sélectionnée dans une quatrième direction, dans lequel la quatrième direction est sensiblement perpendiculaire au plan d'extension de la sous-couche sélectionnée ;
déterminer (S710), sur la base de la quatrième image projetée, si la sous-couche sélectionnée contient uniquement la région d'enveloppe de l'objet cible ; et
dans un cas où la sous-couche sélectionnée contient uniquement la région d'enveloppe de l'objet cible, déterminer (S711) la sous-couche sélectionnée comme étant la région cible.

7. Procédé selon la revendication 4, comprenant en outre : après avoir déterminé la couche sélectionnée comme étant la région cible,
ajouter (S712) une étiquette à la couche sélectionnée ; et
ajouter et stocker (S713) les deuxièmes données de volume tridimensionnel en association avec l'étiquette dans une région de stockage prédéterminée.

8. Procédé selon la revendication 1, dans lequel l'acquisition de premières données de volume tridimensionnel d'un bagage contrôlé comprend :
acquérir les premières données de volume tridimensionnel du bagage contrôlé au moyen d'un dispositif de tomodensitométrie.

9. Appareil (800) de positionnement d'une région cible, comprenant :
un module d'acquisition (810) configuré pour acquérir des premières données de volume tridimensionnel d'un bagage contrôlé ;
un premier module de projection (820) configuré pour générer une première image projetée du bagage contrôlé dans une première direction sur la base des premières données de volume tridimensionnel ;
un module de traçage (830) configuré pour tracer une couche sélectionnée sur la base de la première image projetée, dans lequel un plan d'extension de la couche sélectionnée est parallèle à la première direction ;
un deuxième module de projection (840) configuré pour générer une deuxième image projetée de la couche sélectionnée dans une deuxième direction, dans lequel la deuxième direction est sensiblement perpendiculaire au plan d'extension de la couche sélectionnée ;
un module de détermination (850) configuré pour déterminer, sur la base de la deuxième image projetée, si la couche sélectionnée contient uniquement une région d'enveloppe d'un objet cible dans le bagage contrôlé ; et
un module de positionnement (860) configuré pour déterminer la couche sélectionnée comme étant la région cible lorsque la couche sélectionnée contient uniquement la région d'enveloppe de l'objet cible,
**caractérisé en ce que**
le module de traçage (830) est en outre configuré pour :
tracer une région bidimensionnelle rectangulaire sur la première image projetée ; et
étendre la région bidimensionnelle rectangulaire dans la première direction pour former la couche sélectionnée avec la région bidimensionnelle rectangulaire comme surface latérale, dans lequel un premier grand côté et un deuxième grand côté de la région bidimensionnelle rectangulaire forment respectivement une première surface et une deuxième surface de la couche sélectionnée, la première surface et la deuxième surface sont parallèles à la première direction, et la deuxième direction est sensiblement perpendiculaire à la première surface et à la deuxième surface.

10. Support de stockage lisible par ordinateur (908) ayant des instructions informatiques stockées sur celui-ci, dans lequel les instructions informatiques, lorsqu'elles sont exécutées par un processeur, mettent en œuvre le procédé selon l'une des revendications 1 à 8.

11. Produit programme d'ordinateur comprenant des instructions exécutables, dans lequel les instructions exécutables, lorsqu'elles sont exécutées par un processeur, mettent en œuvre le procédé selon l'une des revendications 1 à 8.
